(19) Europäisches Patentamt
European Patent Office
Office européen des brevets

(11) EP 3 091 052 A1

(12) EUROPEAN PATENT APPLICATION
published in accordance with Art. 153(4) EPC

(43) Date of publication:
**09.11.2016 Bulletin 2016/45**

(21) Application number: **14876311.3**

(22) Date of filing: **10.12.2014**

(51) Int Cl.:
***C08L 67/02*** (2006.01) ***C08L 67/03*** (2006.01)
***C08K 5/29*** (2006.01) ***C08L 101/16*** (2006.01)

(86) International application number:
**PCT/KR2014/012167**

(87) International publication number:
**WO 2015/102257 (09.07.2015 Gazette 2015/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.12.2013 KR 20130167501**

(71) Applicant: **LOTTE Fine Chemical Co., Ltd.**
**Ulsan, 44714 (KR)**

(72) Inventors:
- **KIM, Hee Soo**
**Suwon-si**
**Gyeonggi-do 443-280 (KR)**
- **YEOM, Nam Yeong**
**Daejeon 305-509 (KR)**
- **CHOI, Soo Youn**
**Jeonju-si**
**Jeollabuk-do 560-896 (KR)**

(74) Representative: **Kador & Partner**
**Corneliusstraße 15**
**80469 München (DE)**

# (54) BIODEGRADABLE POLYESTER RESIN COMPOUND FOR FOAMING AND FOAM OBTAINED THEREFROM

(57) Disclosed are a biodegradable polyester resin compound for foaming and a foamed article obtained therefrom. The disclosed biodegradable polyester resin compound for foaming is obtained by melt-kneading a biodegradable polyester resin and a multifunctional chain extender, wherein the biodegradable polyester resin has a melt index (MI) in a range of about 5g/10min to about 15g/10min as measured according to ASTM D1238 at a temperature of about 190°C and under a load of about 2.16 kg, and the amount of the multifunctional chain extender is in a range of 0.3 parts by weight to 1.0 parts by weight based on 100 parts by weight of the biodegradable polyester resin.

EP 3 091 052 A1

## Description

### TECHNICAL FIELD

The present invention relates to a biodegradable polyester resin compound for foaming and a foamed article obtained therefrom, and more particularly, to a biodegradable polyester resin compound for foaming obtained by melt-kneading a biodegradable polyester resin and a multifunctional chain extender, wherein the biodegradable polyester resin has a melt index (MI) of a predetermined range, and the biodegradable polyester resin compound has an improved expansion ratio; and a foamed article obtained therefrom.

### BACKGROUND ART

Plastic foamed articles have advantages of lightweight, cushioning, insulating, and molding properties, and thus, the plastic foamed articles have been mainly used as packaging containers or cushioning materials. Plastic foamed articles, such as polystyrene and polyolefin, have problems of slow degradation by microorganisms when reclaimed, or generation of hazardous gas or deterioration of an incinerator when incinerated.

Recently, to solve such problems above, there is a need for plastic foamed articles made of biodegradable resins that can be degraded by water or microorganisms. In particular, foamed articles made of biodegradable polyester resins have received attention. Since the biodegradable polyester resins can be degraded into water and carbon dioxide or into water and methane gas, by microorganisms present in nature, such as bacteria, algae, and fungi, the problems above can be solved in terms of environmental aspects. However, when being subjected to foaming, the biodegradable resins still have a problem of a low expansion ratio.

### DETAILED DESCRIPTION OF THE INVENTION

### TECHNICAL PROBLEM

An exemplary embodiment of the present invention provides a biodegradable polyester resin compound for foaming that is obtained by melt-kneading a biodegradable polyester resin and a multifunctional chain extender, wherein the biodegradable polyester resin has a melt index (MI) of a predetermined range.

Another exemplary embodiment of the present invention provides a foamed article that is obtained by using the biodegradable polyester resin compound for foaming.

### TECHNICAL SOLUTION

According to one aspect of the present invention, provided is a biodegradable polyester resin compound for foaming obtained by melt-kneading a biodegradable polyester resin and a multifunctional chain extender, wherein the biodegradable polyester resin has a melt index (MI) of in a range of about 5g/10min to about 15g/10min as measured according to ASTM D1238 at a temperature of about 190°C and under a load of about 2.16 kg, and the amount of the multifunctional chain extender is in a range of about 0.3 parts by weight to about 1.0 parts by weight based on 100 parts by weight of the biodegradable polyester resin.

The biodegradable polyester resin may include at least one polymer selected from the group consisting of polyethylene succinate (PES), polybutylene succinate (PBS), polybutylene adipate-terephthalate (PBAT), polyethylene adipate-terephthalate (PEAT), polybutylene succinate-terephthalate (PBST), polyethylene succinate-terephthalate (PEST), polybutylene succinate-adipate-terephthalate (PBSAT), and polyethylene succinate-adipate-terephthalate (PESAT).

The biodegradable polyester resin may have a number-average molecular weight (Mn) in a range of about 40,000 to about 50,000, a weight-average molecular weight (Mw) in a range of about 110,000 to about 200,000, and a Z-average molecular weight (Mz) in a range of about 750,000 to about 1,400,000.

The multifunctional chain extender may include at least one polyisocyanate compound selected from the group consisting of a trimer of alkylene diisocyanate, a triphenylmethane triisocyanate, 1,3,5-benzene triisocyanate, 2,4,5-toluene triisocyanate, 1,3,6-hexamethylene triisocyanate, and a combination thereof.

The biodegradable polyester resin compound may further include at least one additive selected from the group consisting of a thermal stabilizer, a foam nucleating agent, and wax.

The biodegradable polyester resin compound may have an expansion ratio in a range of about 7 times to about 15 times when performing an extrusion foaming process.

According to another aspect of the present invention, provided is a foamed article obtained by using the biodegradable polyester resin compound for foaming

ADVANTAGEOUS EFFECTS OF THE INVENTION

According to an exemplary embodiment of the present invention, there is provided a biodegradable polyester resin compound for foaming with improved expansion ratio.
According to another exemplary embodiment of the present invention, there is provided a foamed article obtained by using the biodegradable polyester resin compound for foaming.

BEST MODE

Hereinafter, a biodegradable resin compound for foaming according to an exemplary embodiment of the present invention will be described in detail.
As used herein, the term "expansion ratio" refers to a ratio of a bulk density of the biodegradable polyester resin compound for foaming at a state before the foaming to a bulk density of the biodegradable polyester resin compound for foaming at a state after the foaming, when the foaming process is performed by the biodegradable polyester resin compound for foaming.
The biodegradable polyester resin compound for foaming according to an embodiment of the present disclosure is obtained by melt-kneading a biodegradable polyester resin and a multifunctional chain extender.
The biodegradable polyester resin may have a melt index of about 5g/10min to about 15g/10min as measured according to ASTM D1238 at a temperature of about 190°C and under a load of about 2.16 kg.
When the melt index of the biodegradable polyester resin is lower than about 5g/10min, an expansion ratio of the biodegradable polyester resin compound for foaming is low, and when the melt index of the biodegradable polyester resin is higher than about 15g/10min, gelation of the biodegradable polyester resin compound for foaming may occur.
The multifunctional chain extender may improve an expansion ratio of the biodegradable polyester resin compound for foaming since the multifunctional chain extender is highly reactive with -OH group and -COOH group positioned at the end of the biodegradable polyester resin.
An amount of the multifunctional chain extender may be in a range of about 0.3 parts by weight to about 1.0 parts by weight based on 100 parts by weight of the biodegradable polyester resin.
When the amount of the multifunctional chain extender is less than about 0.3 parts by weight based on 100 parts by weight of the biodegradable polyester resin, an expansion ratio of the biodegradable polyester resin compound for foaming may be low, and when the amount of the multifunctional chain extender is higher than 1.0 part by weight based on 100 parts by weight of the biodegradable polyester resin, gelation may occur during the melt-kneading.
The biodegradable polyester resin may include at least one polymer selected from the group consisting of polyethylene succinate (PES), polybutylene succinate (PBS), polybutylene adipate-terephthalate (PBAT), polyethylene adipate-terephthalate (PEAT), polybutylene succinate-terephthalate (PBST), polyethylene succinate-terephthalate (PEST), polybutylene succinate-adipate-terephthalate (PBSAT), and polyethylene succinate-adipate-terephthalate (PESAT).
The biodegradable polyester resin may have a number-average molecular weight in a range of about 40,000 to about 50,000, a weight-average molecular weight in a range of about 110,000 to about 200,000, and a Z-average molecular weight in a range of about 75,000 to about 1,400,000. When the number-average molecular weight, weight-average molecular weight, and Z-average molecular weight of the biodegradable polyester resin are within these ranges, gelation of the biodegradable polyester resin compound for foaming may be prevented.
The biodegradable polyester resin may be prepared by esterification reaction and polycondensation reaction between at least one di-functional carboxylic acid or three or more multi-functional carboxylic acids and at least one di-functional hydroxyl compound or three or more multi-functional hydroxyl compounds. For example, the biodegradable polyester resin may be prepared by esterification reaction and polycondensation reaction between dicarboxylic acid and diol.
As used herein, the term "dicarboxylic acid" refers to dicarboxylic acid itself, an ester derivative of dicarboxylic acid, an acyl halide derivative of dicarboxylic acid, an anhydrous derivative of dicarboxylic acid, or a combination thereof.
As used herein, the term "diol" refers to a compound that contains at least two hydroxyl groups.
Examples of the dicarboxylic acid may include at least one compound selected from the group consisting of aromatic dicarboxylic acid, such as terephthalic acid, isophthalic acid, 2,6-naphthoic acid, 1,5-naphthoic acid, or a combination thereof; and aliphatic dicarboxylic acid, such as malonic acid, succinic acid, glutaric acid, 2-methylglutaric acid, 3-methylglutaric acid, adipic acid, pimelic acid, suberic acid, azelaic acid, sebacic acid, undecanedioic acid, dodecanedioic acid, brassylic acid, tetradecanedioic acid, fumaric acid, 2,2-dimethylglutaric acid, maleic acid, itaconic acid, or a combination thereof.
Examples of the diol may include at least one compound selected from aliphatic diol such as ethandiol, 1,2-propanediol, 1,3-propanediol, 1,2-butanediol, 1,4-butanediol, 1,5-pentanediol, 1,6-hexanediol, 2,4-dimethyl-2-ethyl-1,3-hexanediol, 2,2-dimethyl-1,3-propanediol, 2-ethyl-2-butyl-1,3-propanediol, 2-ethyl-2-isobutyl-1,3-propanediol, 2,2,4-trimethyl-1,6-hexanediol, or a combination thereof; and aromatic diol such as 1,2-benzenediol, 1,3-benzenediol, 1,4-benzenediol, 1,3-naphthalenediol, 1,4-naphthalenediol, 1,7-naphthalenediol, 2,3-naphthalenediol, 2,6-naphthalenediol, 2,7-naphthalenediol, or a combination thereof.

In the esterification reaction, the amount of the diol used may be in a range of about 1.0 part by mol to about 2.0 parts by mol based on 1 part by mol of the amount of the dicarboxylic acid used.

The esterification reaction may be performed at a temperature in a range of about 180°C to about 200°C for about 120 minutes to about 140 minutes.

An endpoint of the esterification reaction may be determined by measuring an amount of alcohol or water produced as by-products from the reaction.

In order to increase a reaction rate by shifting chemical equilibrium in the esterification reaction, the alcohol and water produced as by-products, and/or unreacted diol compounds may be discharged to the outside of the reaction system by evaporation or distillation.

In order to promote the esterification reaction, the esterification reaction may be performed in the presence of a catalyst, a thermal stabilizer, a branching agent, and/or a color controlling agent.

Examples of the catalyst may include magnesium acetate, tin(II) acetate, tetra-n-butyl titanate, lead acetate, sodium acetate, potassium acetate, antimony trioxide, N,N-dimethylaminopyridine, N-methylimidazole, or a combination thereof. The catalyst is typically added together with a monomer during addition of the monomer. The amount of the catalyst used may be, for example, in a range of about 0.00001 part by mol to about 0.2 parts by mol based on 1 part by mol of the amount of the dicarboxylic acid used.

The thermal stabilizer may be an organic or an inorganic phosphorus compound. Examples of the organic or inorganic phosphorus compound may include phosphoric acid or an organic ester thereof and phosphorous acid or an organic ester thereof. For example, the thermal stabilizer is commercially available and may be a phosphoric acid, an alkyl phosphate, or an aryl phosphate. For example, the thermal stabilizer may be triphenyl phosphate. The amount of the thermal stabilizer used when the catalyst is used together with the thermal stabilizer may be, for example, in a range of about 0.00001 part by mol to about 0.2 parts by mol based on 1 part by mol of the amount of the dicarboxylic acid used.

The branching agent may be used to control biodegradability or properties of the polyester resin. The branching agent may be a compound having at least three groups selected from a carboxylic group, a hydroxyl group, and an amine group that are capable of forming ester or amide. In particular, examples of the branching agent may include pyromellitic dianhydride, trimellitic acid, citric acid, malic acid, glycerol, monosaccharide, disaccharide, dextrin, or reduced sugar. The amount of the branching agent used may be in a range of about 0.00001 parts by mol to about 0.2 parts by mol based on 1 part by mol of the amount of the dicarboxylic acid used.

The color controlling agent is an additive that is used to control a chromaticity of the biodegradable polyester resin. The color controlling agent may be cobalt acetate. The amount of the color controlling agent used may be in a range of about 0.00001 parts by mol to about 0.2 parts by mol based on 1 part by mol of the dicarboxylic acid.

The esterification may be performed at normal pressure. As used herein, the term "normal pressure" refers to a pressure in a range of about $760\pm10$ torr.

An oligomer having an ester bond may be produced by the esterification reaction.

The product (i.e., oligomer) of the esterification reaction may be further polycondensed to have a higher molecular weight. The polycondensation may be performed at a temperature in a range of about 225°C to about 240°C for about 115 minutes to about 160 minutes.

The polycondensation may be performed at a pressure of 1 torr or lower. In this regard, by performing the polycondensation in vacuum, a biodegradable polyester resin having a high molecular weight may be obtained, while unreacted raw materials (unreacted monomers), low molecular weight oligomers, and water and/or methanol produced as by-products, are removed.

The biodegradable polyester resin thus prepared reacts with the multifunctional chain extender in their melted states via melt-kneading with the multifunctional chain extender, and thus the biodegradable polyester resin compound for foaming may be formed.

The multifunctional chain extender may be a compound having at least two isocyanate groups and/or at least two epoxy groups.

The multifunctional chain extender may include at least one polyisocyanate compound selected from the group consisting of a trimer of alkylene diisocyanate, triphenylmethane triisocyanate, 1,3,5-benzene triisocyanate, 2,4,5-toluene triisocyanate, 1,3,6-hexamethylene triisocyanate, and a combination thereof.

The trimer of alkylene diisocyanate may be, for example, polyisocyanate represented by Formula 1 commercially available from Aekyung Chemical Co., Ltd.

[Formula 1]

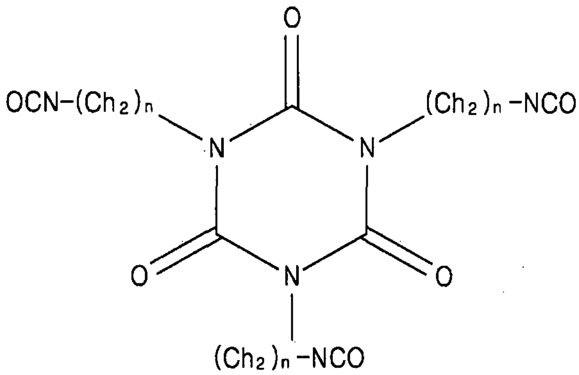

In Formula 1, 'n' s may be each independently 1 to 10, or, for example, 6.

In addition, for example, the multifunctional chain extender may include at least one polymer selected from the group consisting of: diepoxide comprising a bisphenol A-type epoxy resin, a hydrogenated bisphenol A-type epoxy resin, a brominated bisphenol A-type epoxy resin, a bisphenol F-type epoxy resin, a bisphenol S-type epoxy resin, a bixylenol-type epoxy resin, a biphenol-type epoxy group, or a combination thereof;

triepoxide comprising a novolac-type epoxy resin, a phenol novolac-type epoxy resin, a bixylenol-type epoxy resin, a cresol novolac-type epoxy resin, an N-glycidyl-type epoxy resin, a novolac-type epoxy resin of bisphenol A, a biphenol novolac-type epoxy resin, a chelate-type epoxy resin, a glyoxal-type epoxy resin, an amino group-containing epoxy resin, a rubber-modified epoxy resin, a dicyclopentadiene phenolic epoxy resin, a tetrakisphenolethane-type epoxy resin, a diglycidyl phthalate resin, a heterocyclic epoxy resin, a tetraglycidyl xylenoylethane resin, a silicone-modified epoxy resin, or an ε-caprolactone-modified epoxy resin, or a combination thereof;

a poly glycidyl (meth)acrylate oligomer; and

a poly glycidyl (meth)acrylate polymer.

The biodegradable polyester resin compound for foaming may further include at least one additive selected from the group consisting of a thermal stabilizer, a foam nucleating agent, and wax.

The thermal stabilizer may be the same thermal stabilizer as that used in a polymerization process of the biodegradable polyester resin.

The amount of the thermal stabilizer may be in a range of about 0.01 part by weight to about 0.2 parts by weight based on 100 parts by weight of the biodegradable polyester resin.

When the amount of the thermal stabilizer is within this range, thermal degradation of the biodegradable polyester resin may not occur during a melt-kneading process for preparation of the biodegradable polyester resin compound for foaming.

The foam nucleating agent may include at least one compound selected from the group consisting of an inorganic foam nucleating agent, such as diatomite, sintered perlite, kaolin zeolite, clay, silica, talc, calcium carbonate, and zinc borate; and an organic foam nucleating agent, such as charcoal, cellulose, and starch.

The amount of the foam nucleating agent is in a range of about 0.1 parts by weight to about 0.5 parts by weight based on 100 parts by weight of the biodegradable polyester resin. When the amount of the foam nucleating agent is within this range, the foam cell may be formed in an appropriate size, thereby obtaining a biodegradable polyester resin compound for foaming having a high expansion ratio.

As used herein, the term "foam cell" refers to a microstructure expanded by the foaming in the polymer.

The wax may serve as a flow enhancer to improve flowability of the biodegradable polyester resin compound for foaming.

The wax may include, for example, at least one compound selected from the group consisting of vegetable-based wax, such as Candelilla wax, Carnauba wax, Jojoba wax, Rice wax, and Japan wax; animal-based wax, such as Shellac wax and Lanolin wax; mineral-based wax, such as Montan wax and Ozokerite wax; and petroleum-based wax, such as Paraffin wax and microcrystalline wax.

The amount of the wax may be in a range of about 0.01 parts by weight to about 0.2 parts by weight based on 100 parts by weight of the biodegradable polyester resin.

When the amount of the wax is within the range above, the flowability of the biodegradable polyester resin may be improved during the melt-kneading process for preparation of the biodegradable polyester resin compound for foaming.

The biodegradable polyester resin compound for foaming has a number-average molecular weight in a range of about 50,000 to about 70,000, a weight-average molecular weight in a range of about 240,000 to about 300,000, and a Z-average molecular weight in a range of about 3,600,000 to about 4,000,000. When the number-average molecular

weight, weight-average molecular weight, and Z-average molecular weight of the biodegradable polyester resin compound for foaming are within these ranges, the foam cell may be easily formed, and the biodegradable polyester resin compound for foaming with improved expansion ratio may be obtained.

When measured based on GPC, the biodegradable polyester resin compound for foaming may have a polydispersity index in a range of about 4.0 to about 5.0. When the polydispersity index of the biodegradable polyester resin compound for foaming is within this range, the foam cell may be obtained in a uniform size, and the biodegradable polyester resin compound for foaming may have improved processibility and expansion ratio.

The biodegradable polyester resin compound for foaming may have a melt index in a range of about 2.0g/10min to about 5.0g/10min as measured according to ASTM D1238 at a temperature of about 190°C and under a load of about 2.16 kg. When the melt index of the biodegradable polyester resin compound for foaming is within this range, the foam cell may be easily formed, and the formed foam cell may not be easily destroyed.

When measured based on Advanced Rheometric Expansion System (ARES) under conditions of a temperature of about 160°C, a strain of about 10%, and a frequency of about 0.1 Hz, the biodegradable polyester resin compound for foaming may have a melt viscosity in a range of about 3,000 Pa·s to about 8,000 Pa·s. When the melt viscosity of the biodegradable polyester resin compound for foaming is within this range, the foam cell may be easily formed and the formed foam cell may not be easily destroyed.

The biodegradable polyester resin compound for foaming may have an expansion ratio in a range of about 7 times to about 15 times when performing an extrusion foaming process.

According to another exemplary embodiment, there is provided a foamed article obtained by using the biodegradable polyester resin compound for foaming. The foamed article may be obtained by foaming and optionally molding the biodegradable polyester resin compound for foaming. The foamed article obtained by using the biodegradable polyester resin compound for foaming may be applied to, for example, a foam sheet, a molded container, and a packaging material.

Hereinafter, the present disclosure will be described in detail in connection with the following examples below, but is not limited thereto.

MODE OF THE INVENTION

Example

Examples 1 to 5 and Comparative Examples 1 to 5

<Synthesis of biodegradable polyester resin>

(Esterification reaction)

117.16 g (1.30 mol) of 1,4-butanediol, 93.20 g (0.48 mol) of dimethyl terephthalate, 0.5 g (0.0022 mol) of pyromellitic dianhydride, 0.1 g (0.3 mmol) of triphenyl phosphate, 0.3 g (0.88 mmol) of tetra-n-butyl titanate, and 0.1 g (0.86 mmol) of cobalt acetate were added to a 500-ml 3-neck round bottom flask equipped with a condenser, a nitrogen inlet, and a stirrer to prepare a mixture. Then, a temperature of the mixture was increased up to 200°C, and the mixture was reacted while stirring until at least 90% (i.e., 35 ml) of methanol of a theoretical value was produced in nitrogen atmosphere, and the produced methanol was discharged. Here, methanol thus produced was completely discharged to the outside of the system via the condenser. Then, 75.99 g (0.52 mol) of adipic acid was added to the 3-neck round bottom flask, and the mixture was reacted while stirring until at least 90% (i.e., 17 ml) of water was produced, and the produced water was discharged. Here, water thus produced was discharged to the outside of the 3-neck round bottom flask via the condenser.

(Polycondensation reaction)

Subsequently, a temperature of the 3-neck round bottom flask was increased up to 240°C in vacuum of 1 torr or lower, and the reaction was allowed to be performed for a time period shown in Table 1, and then the content of the flask was discharged. As a result, a biodegradable polyester(poly(butylene adipate terephthalate (PBAT))) resin was obtained.

<Preparation of biodegradable polyester resin composition>

The PBAT resin, triphenyl phosphate (Mw: 326.30, manufactured by Daihachi), talc (Kcs-25 manufactured by Koch. Co), and Polyisocyanate (Mw: 7,500, NCO content: 21.25 weight%, H-5 manufactured by Aekyung Chemical Co.,

Ltd.) were mixed at a ratio shown in Table 1 below, thereby preparing a biodegradable polyester resin composition.

The polycondensation time in the synthesis process of the biodegradable polyester resin, and amounts of the PBAT resin, triphenyl phosphate, talc, and polyisocyanate used in preparation of the biodegradable polyester resin composition are shown in Table 1.

[Table 1]

| | Polycondensation reaction time (mins) | PBAT resin (parts by weight) | TPP (parts by weight) | Talc (parts by weight) | Polyisocyanate (parts by weight) |
|---|---|---|---|---|---|
| Example 1 | 145 | 100 | 0.05 | 0.3 | 0.3 |
| Example 2 | 145 | | | | 0.5 |
| Example 3 | 150 | | | | 0.5 |
| Example 4 | 120 | | | | 0.5 |
| Example 5 | 145 | | | | 1.0 |
| Comparative Example 1 | 160 | | | | 0.1 |
| Comparative Example 2 | 145 | | | | 0.1 |
| Comparative Example 3 | 145 | | | | 0.2 |
| Comparative Example 4 | 145 | | | | 1.1 |
| Comparative Example 5 | 115 | | | | 0.7 |
| TPP: triphenyl phosphate | | | | | |

<Extrusion foaming of biodegradable polyester resin compound for foaming>

(Preparation of biodegradable polyester resin compound for foaming)

A twin-screw extruder (L/D: 36:1, diameter: 24.2 Φ, CHS 25-36-2V-1S manufactured by Changsung P&R) was used to melt-knead the biodegradable polyester resin composition at a barrel temperature of about 180°C and at a stirring rate of about 250 rpm, thereby preparing a biodegradable polyester resin compound for foaming.

(Extrusion foaming of the biodegradable polyester resin compound for foaming)

Each of the biodegradable polyester resin compounds for foaming was fed to a hopper of an extrusion foaming device (PolyLab OS-Foaming Extruder manufactured by Haake), and then, $CO_2$ gas was injected thereto via a $CO_2$ inlet at a rate of 1 ml/min. Here, a pressure of the $CO_2$ gas was about 7,000 psi. The biodegradable polyester resin compound for foaming and the $CO_2$ gas were further mixed in a static mixer Die-1 (at a temperature of about 110°C), and then, an extrusion foamed PBAT resin compound was obtained by discharging the content of the extrusion foaming device through Die-2 (at a temperature of about 102°C). Here, the rotating speed of a screw was about 40 rpm, and a barrel of the extrusion foaming device included the 4 following regions: an inlet, a section between the inlet and the $CO_2$ inlet, the $CO_2$ inlet, and a section between the $CO_2$ inlet and the Die-1. At each of the regions, temperatures were about 120°C, 150°C, 160°C, and 160°C, respectively.

Evaluation Example 1: Physical property evaluation of biodegradable polyester (PBAT) resin

(Melt index measurement)

Melt index measurement tests on the PBAT resins prepared in Examples 1 to 5 and Comparative Examples 1 to 5 were performed according to ASTM D1238 at a temperature of 190°C and under a load of 2.16 kg, and an amount

(g) of each of the PBAT resins flowed out through an orifice (having a radius of 2 mm and a length of 8 mm) for 10 minutes was recorded as a melt index.

(Number-average molecular weight, Weight-average molecular weight, and Z-average molecular weight measurement)

The PBAT resins prepared in Examples 1 to 5 and Comparative Examples 1 to 5 were each dissolved in chloroform at a concentration of 1 wt% to obtain a PBAT resin solution, and the PBAT resin solution was analyzed through gel-permeation chromatography (GPC) to obtain a number-average molecular weight, a weight-average molecular weight, and a Z-average molecular weight of the PBAT resin. The results are shown in Table 2. A temperature of the measurement was 35°C, and a flow rate was 1 ml/min.

<u>Evaluation Example 2: Property evaluation of PBAT resin compound for foaming</u>

(Melt viscosity measurement)

A melt viscosity of each of the PBAT resin compounds was measured by using ARES (ARES-G2 manufactured by TA Instrument) under conditions of a temperature of about 160°C, a strain of about 10%, and a frequency of about 0.1 Hz. The measurement results are shown in Table 2 below.

(Melt index measurement)

A melt index of the PBAT resin compound was measured in the same manner as in the measurement of the melt index of the PBAT resin.

(Number-average molecular weight, Weight-average molecular weight, Z-average molecular weight, and polydispersity index measurement)

A number-average molecular weight, a weight-average molecular weight, a Z-average molecular weight, and a polydispersity index of the PBAT resin compound were measured in the same manner as in the measurement of the molecular weights of the PBAT resin.

(Expansion ratio measurement)

The bulk density of the extrusion foamed PBAT resin compounds of Examples 1 to 5 and Comparative Examples 1 to 5 at a state before the foaming and the bulk density of the extrusion foamed PBAT resin compounds of Examples 1 to 5 and Comparative Examples 1 to 5 at a state after the foaming were calculated, and according to Equation 1 below, the expansion ratio of each of the PBAT resin compounds was calculated. The calculated results are shown in Table 2 below.

[Equation 1]

Expansion ratio (times) = A bulk density of the PBAT resin compound before foaming/ A bulk density of the PBAT resin compound after foaming

[Table 2]

| | Properties of the PBAT resins | | Properties of the PBAT resin compounds | | | | |
|---|---|---|---|---|---|---|---|
| | MI | Mn/Mw/Mz | η* (Pa·s) | MI | Mn/Mw/Mz | PDI | Expansion ratio (times) |
| Example 1 | 7.2 | 48,100/174,000/ 1,250,000 | 5,215 | 4.5 | 52,000/243,000 / 3,620,000 | 4.67 | 7.6 |
| Example 2 | 7.2 | 48,100/174,000/ 1,250,000 | 7,216 | 2.5 | 54,000/260,000 / 3,760,000 | 4.81 | 11.2 |

(continued)

| | Properties of the PBAT resins | | Properties of the PBAT resin compounds | | | | |
|---|---|---|---|---|---|---|---|
| | MI | Mn/Mw/Mz | η* (Pa·s) | MI | Mn/Mw/Mz | PDI | Expansion ratio (times) |
| Example 3 | 5 | 49,000/185,000/ 1,370,000 | 6,890 | 2.3 | 56,000/265,000 / 3,770,000 | 4.73 | 10.8 |
| Example 4 | 15 | 42,000/115,000/ 750,000 | 6,532 | 4.3 | 53,000/245,000 / 3,670,000 | 4.62 | 9.0 |
| Example 5 | 7.2 | 48,100/174,000/ 1,250,000 | 7,824 | 2.0 | 55,000/275,000 / 3,830,000 | 5.00 | 12.4 |
| Comparati ve Example 1 | 3.4 | 55,4000/218,000 /1,440,000 | 4,565 | 2.3 | 61,400/238,000 /3,510,000 | 3.87 | 4.0 |
| Comparati ve Example 2 | 7.2 | 48,100/174,000/ 1,250,000 | 3,321 | 6.5 | 51,000/217,000 / 3,030,000 | 4.24 | 4.2 |
| Comparati ve Example 3 | 7.2 | 48,100/174,000/ 1,250,000 | 4,160 | 5.5 | 51,000/240,000 / 3,580,000 | 4.72 | 4.6 |
| Comparati ve Example 4 | 7.2 | 48,100/174,000/ 1,250,000 | 10,65 1 | 1.7 | 56,000/290,000 / 3,970,000 | 5.17 | 4.5 |
| Comparati ve Example 5 | 16 | 40,500/103,000/ 692,000 | 4,865 | 6.2 | 45,500/173,000 / 998,000 | 3.80 | 6.7 |
| MI: melt index<br>Mn: number-average molecular weight<br>Mw: weight-average molecular weight<br>Mz: Z-average molecular weight<br>η*: melt viscosity<br>PDI: polydispersity index | | | | | | | |

Referring to Table 2, it was found that the biodegradable polyester resin compounds for foaming of Examples 1 to 5 had higher expansion ratio compared to those of the biodegradable polyester resin compounds for foaming of Comparative Examples 1 to 5.

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the spirit and scope of the inventive concept as defined by the following claims.

## Claims

1. A biodegradable polyester resin compound for foaming obtained by melt-kneading a biodegradable polyester resin and a multifunctional chain extender, wherein the biodegradable polyester resin has a melt index (MI) of in a range of about 5g/10min to about 15g/10min as measured according to ASTM D1238 at a temperature of about 190°C and under a load of about 2.16 kg, and the amount of the multifunctional chain extender is in a range of about 0.3 parts by weight to about 1.0 parts by weight based on 100 parts by weight of the biodegradable polyester resin.

2. The biodegradable polyester resin compound of claim 1, wherein the biodegradable polyester resin comprises at least one polymer selected from the group consisting of polyethylene succinate (PES), polybutylene succinate (PBS), polybutylene adipate-terephthalate (PBAT), polyethylene adipate-terephthalate (PEAT), polybutylene succinate-terephthalate (PBST), polyethylene succinate-terephthalate (PEST), polybutylene succinate-adipate-terephthalate (PBSAT), and polyethylene succinate-adipate-terephthalate (PESAT).

3. The biodegradable polyester resin compound of claim 1, wherein the biodegradable polyester resin has a number-average molecular weight (Mn) in a range of about 40,000 to about 50,000, a weight-average molecular weight (Mw) in a range of about 110,000 to about 200,000, and a Z-average molecular weight (Mz) in a range of about 750,000 to about 1,400,000.

4. The biodegradable polyester resin compound of claim 1, wherein the multifunctional chain extender comprises at least one polyisocyanate compound selected from the group consisting of a trimer of alkylene diisocyanate, a triphenylmethane triisocyanate, 1,3,5-benzene triisocyanate, 2,4,5-toluene triisocyanate, 1,3,6-hexamethylene triisocyanate, and a combination thereof.

5. The biodegradable polyester resin compound of claim 1, further comprising at least one additive selected from the group consisting of a thermal stabilizer, a foam nucleating agent, and wax.

6. The biodegradable polyester resin compound of claim 1 having an expansion ratio in a range of about 7 times to about 15 times when performing an extrusion foaming process.

7. A foamed article obtained by using the biodegradable polyester resin compound for foaming of any one of claims 1 to 6.

INTERNATIONAL SEARCH REPORT

International application No.
**PCT/KR2014/012167**

A. CLASSIFICATION OF SUBJECT MATTER

***C08L 67/02(2006.01)i, C08L 67/03(2006.01)i, C08K 5/29(2006.01)i, C08L 101/16(2006.01)i***

According to International Patent Classification (IPC) or to both national classification and IPC

B. FIELDS SEARCHED

Minimum documentation searched (classification system followed by classification symbols)
C08L 67/02; C08L 67/03; C08L 101/16; C08G 63/16; C08G 63/08; C08K 3/34; C08J 9/06; C08G 63/78; C08L 67/04; C08K 5/29

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: polyester, chain extender, foam, triisocyanate

C. DOCUMENTS CONSIDERED TO BE RELEVANT

| Category* | Citation of document, with indication, where appropriate, of the relevant passages | Relevant to claim No. |
|---|---|---|
| Y | KR 10-2012-0107918 A (METABOLIX, INC.) 04 October 2012<br>See abstract; claims 1, 11; and paragraphs [0005], [0106], [0145]. | 1-7 |
| Y | KR 10-2013-0027095 A (SAMSUNG FINE CHEMICALS CO., LTD) 15 March 2013<br>See abstract; claims 1, 8-10; and paragraphs [0051], [0052]. | 1-7 |
| A | US 2012-0178837 A1 (MEHTA, Sanjay et al.) 12 July 2012<br>See abstract; and claim 1. | 1-7 |
| A | KR 10-2009-0008899 A (JEONG, Ji Soo) 22 January 2009<br>See abstract; and claims 1-3, 5, 7, 18. | 1-7 |
| A | KR 10-2012-0076718 A (LG HAUSYS, LTD.) 10 July 2012<br>See abstract; and claims 1, 4, 7, 12. | 1-7 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 MARCH 2015 (11.03.2015) | **12 MARCH 2015 (12.03.2015)** |

| Name and mailing address of the ISA/**KR** | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.
PCT/KR2014/012167

| Patent document cited in search report | Publication date | Patent family member | Publication date |
|---|---|---|---|
| KR 10-2012-0107918 A | 04/10/2012 | CA 2766298 A1 | 29/12/2010 |
| | | CA 2766301 A1 | 29/12/2010 |
| | | CN 102459462 A | 16/05/2012 |
| | | CN 102459462 B | 24/07/2013 |
| | | CN 102482482 A | 30/05/2012 |
| | | EP 2445965 A2 | 02/05/2012 |
| | | EP 2445966 A2 | 02/05/2012 |
| | | KR 10-2012-0107917 A | 04/10/2012 |
| | | US 2012-0107630 A1 | 03/05/2012 |
| | | US 2012-0108743 A1 | 03/05/2012 |
| | | US 8524856 B2 | 03/09/2013 |
| | | WO 2010-151798 A2 | 29/12/2010 |
| | | WO 2010-151798 A3 | 31/03/2011 |
| | | WO 2010-151811 A2 | 29/12/2010 |
| | | WO 2010-151811 A3 | 31/03/2011 |
| KR 10-2013-0027095 A | 15/03/2013 | CN 103842403 A | 04/06/2014 |
| | | EP 2752438 A2 | 09/07/2014 |
| | | JP 2014-527568 A | 16/10/2014 |
| | | US 2014-0121332 A1 | 01/05/2014 |
| | | WO 2013-032140 A2 | 07/03/2013 |
| | | WO 2013-032140 A3 | 25/04/2013 |
| US 2012-0178837 A1 | 12/07/2012 | CN 102459461 A | 16/05/2012 |
| | | EP 2438117 A2 | 11/04/2012 |
| | | JP 2012-528927 A | 15/11/2012 |
| | | MX 2011012852 A | 16/12/2011 |
| | | RU 2011154088 A | 20/07/2013 |
| | | WO 2010-141717 A2 | 09/12/2010 |
| | | WO 2010-141717 A3 | 31/03/2011 |
| | | WO 2010-141717 A4 | 19/05/2011 |
| KR 10-2009-0008899 A | 22/01/2009 | NONE | |
| KR 10-2012-0076718 A | 10/07/2012 | CN 102582173 A | 18/07/2012 |
| | | EP 2658906 A2 | 06/11/2013 |
| | | JP 2014-501317 A | 20/01/2014 |
| | | US 2013-0266767 A1 | 10/10/2013 |
| | | WO 2012-091366 A | 05/07/2012 |
| | | WO 2012-091366 A3 | 18/10/2012 |

Form PCT/ISA/210 (patent family annex) (July 2009)